# EUROPÄISCHE PATENTSCHRIFT

(11) **EP 1 101 035 B1**
(45) Veröffentlichungstag und Bekanntmachung des Hinweises auf die Patenterteilung: **29.12.2004**
(21) Anmeldenummer: 00926713.9
(22) Anmeldetag: 06.04.2000
(51) Int. Cl.: F04B 53/14, F04B 53/12

(54) **KOLBENPUMPE**
PISTON PUMP
POMPE A PISTON

(30) Priorität: 29.05.1999 DE 19924774
(43) Veröffentlichungstag der Anmeldung: 23.05.2001
(73) Patentinhaber: ROBERT BOSCH GMBH, 70442 Stuttgart (DE)
(72) Erfinder: HAUSER, Manfred, D-71701 Schwieberdingen (DE); ALAZE, Norbert, D-71706 Markgroeningen (DE); KREMSREITER, Walter, D-87541 Hindelang (DE); DUERMEIER, Thorsten, D-71665 Vaihingen/Enz (DE); REINER, Juergen, D-88167 Gruenenbach (DE); RITTLER, Werner, D-87509 Immenstadt (DE); ECKSTEIN, Ursula, D-71701 Schwieberdingen (DE); WEH, Andreas, D-87471 Durach (DE); MANK, Erika, D-71634 Ludwigsburg (DE)
(86) Internationale Anmeldenummer: PCT/DE2000/001098
(87) Internationale Veröffentlichungsnummer: WO 2000/073658

(56) Entgegenhaltungen:
- WO-A-99/06703
- DE-A- 3 928 375
- DE-A- 4 236 682
- DE-A- 19 831 450
- US-A- 4 462 302

## Beschreibung

### Stand der Technik

Die Erfindung betrifft eine Kolbenpumpe mit den Merkmalen des Oberbegriffs des Anspruchs 1, die insbesondere zur Verwendung in einer schlupfgeregelten, hydraulischen Fahrzeugbremsanlage vorgesehen ist.

Derartige Kolbenpumpen sind an sich bekannt. Beispielhaft wird auf die DE 41 07 979 A1 verwiesen. Die bekannte Kolbenpumpe weist ein Pumpengehäuse mit einer Pumpenbohrung auf, in der ein Kolben unmittelbar oder mittelbar in einer in die Pumpenbohrung eingesetzten Laufbuchse axial verschieblich geführt ist. Die Pumpenbohrung bzw. die Laufbuchse bilden eine Kolbenführung. Zur Förderung von Fluid ist der Kolben zu einer in axialer Richtung hin- und hergehenden Hubbewegung antreibbar. Als Antriebselement weist die bekannte Kolbenpumpe einen rotierend antreibbaren Exzenter auf, an dessen Umfang der Kolben mit seinem Stirnende anliegt. Eine in die Pumpenbohrung eingesetzte Kolbenrückstellfeder drückt den Kolben gegen den Umfang des Exzenters und hält den Kolben in Anlage am Umfang des Exzenters. Zur Steuerung einer Fluidströmungsrichtung durch die Kolbenpumpe weist die Kolbenpumpe ein Ventil auf, das üblicher Weise als federbeaufschlagtes Rückschlagventil ausgebildet ist und ein Ein- oder ein Auslassventil der Kolbenpumpe bildet.

Aus der US 4,462,302 A ist eine Kolbenpumpe als Kraftstoffförderpumpe bekannt, die einen kreisscheibenförmigen Kolben aufweist, der in einer Zylinderbohrung axial verschieblich geführt ist. Zum Antrieb dient ein Exzenter, der den Kolben über einen Stößel zu einer in axialer Richtung hin- und hergehenden Hubbewegung antreibt. Als Auslassventil weist der Kolben ein Plattenventil auf. Eine Kolbenrückstellfeder ist in der Zylinderbohrung angeordnet, sie stützt sich an einem Grund der Zylinderbohrung ab und beaufschlagt den Kolben und den Stößel über einen zwischengelegten Teller in Richtung des Exzenters. Zur Abdichtung des Kolbens in der Zylinderbohrung weist der Kolben umlaufende Nuten auf, die eine Labyrinthdichtung bilden.

### Vorteile der Erfindung

Der Kolben der erfindungsgemäßen Kolbenpumpe mit den Merkmalen des Anspruchs 1 weist ein Ventilsitzteil, das einen Ventilsitz des die Fluidströmungsrichtung durch die Kolbenpumpe steuernden Ventils und eine mit dem Ventilsitzteil einstückige Kolbendichtung auf, die den Kolben insbesondere auf dessen Hochdruckseite in der Kolbenführung abdichtet. Dadurch entfällt eine separate Dichtung sowie der Aufwand zur Herstellung einer Nut zur Aufnahme der Dichtung und das Einlegen der Dichtung in die Nut.

Des Weiteren weist der Kolben der erfindungsgemäßen Kolbenpumpe einen beispielsweise rohr- oder ringförmigen Abstützkörper auf, an dem die Rückstellfeder angreift und über den die Rückstellfeder den Kolben gegen den Umfang des den Kolben antreibenden Exzenters oder gegen ein sonstiges Antriebselement drückt. Der Abstützkörper stützt sich mit Abstand vom Ventilsitz und mit Abstand von der Kolbendichtung des Ventilsitzteils am Ventilsitzteil ab. Der Abstützkörper bewirkt eine gleichmäßige und verteilte Übertragung der von der Rückstellfeder ausgeübten Kraft auf das Ventilsitzteil und vermeidet dadurch eine Verformung oder Beschädigung des Ventilsitzteils, insbesondere wenn dieses aus Kunststoff besteht. Da der Abstützkörper die Kraft der Rückstellfeder mit Abstand vom Ventilsitz und von der Kolbendichtung in das Ventilsitzteil einleitet, werden der Ventilsitz und die Kolbendichtung von der von der Rückstellfeder ausgeübten Kraft weitestgehend oder vollständig freigehalten. Eine Verformung oder Beschädigung des Ventilsitzes und der Kolbendichtung durch die Kraft der Rückstellfeder wird vermieden, Funktion und Dichtheit des Ventilsitzes und der Kolbendichtung werden in Folge der Verwendung des Abstützkörpers nicht beeinträchtigt. Der erfindungsgemäße Abstützkörper ermöglicht einen ausreichenden Abstand der Einleitung der Kraft der Rückstellfeder vom Ventilsitz und der Kolbendichtung in das Ventilsitzteil bei den üblicherweise kleinen Abmessungen der Kolben von Kolbenpumpen für schlupfgeregelte, hydraulische Fahrzeugbremsanlagen. Derartige Kolben weisen einen Durchmesser von beispielsweise 5 mm auf.

Um trotz insgesamt kleiner Baugröße einen möglichst großen Abstand zwischen dem Angriffspunkt des Abstützkörpers am Ventilsitzteil sowohl vom Ventilsitz als auch von der Kolbendichtung zu erreichen, greift erfindungsgemäß der Abstützkörper an einem Grund einer Nut zwischen der als Dichtlippe ausgebildeten Kolbendichtung und dem Ventilsitzteil an.

Die Erfindung ermöglicht einen kleinbauenden und kompakten Aufbau der Kolbenpumpe. Weitere Vorteile sind die Herstellung aus einfach und preiswert herstellbaren und aus wenigen Bauteilen. Der Kolben ist hinsichtlich seiner Herstellung optimiert bei Gewährleistung seiner vollen Funktionsfähigkeit.

Die Unteransprüche haben vorteilhafte Ausgestaltungen und Weiterbildungen der im Anspruch 1 angegebenen Erfindung zum Gegenstand.

Gemäß Anspruch 3 bildet der Abstützkörper für die Rückstellfeder zugleich einen Halter und/oder eine Führung für einen Ventilschließkörper des am Kolben angebrachten, die Fluidströmungsrichtung durch die Kolbenpumpe steuernden Ventils.

Bei Ausbildung dieses Ventils als federbeaufschlagtes Rückschlagventil stützt sich gemäß Anspruch 5 eine Ventilschließfeder des Ventils am Abstützkörper ab. Dies verringert die Anzahl der benötigten Bauteile und es wird erreicht, daß die Ventilschließfeder keinen negativen Einfluß auf den Ventilsitz hat.

Der Kolben kann mit dem Ventilsitzteil einstückig ausgebildet sein. Gemäß Anspruch 7 weist die Kolbenpumpe einen aus mehreren, im wesentlichen aus zwei Teilen zusammengesetzten Kolben auf. Der Kolben umfaßt ein hülsenförmiges, auf einer Seite geschlossenes und auf einer anderen Seite offenes Umformteil auf, das beispielsweise durch Tiefziehen, Kaltschlagen oder Fließpressen hergestellt ist. Die Verwendung eines Umformteils hat den Vorteil, daß es einfach, schnell und preisgünstig in einem Arbeitsgang herstellbar ist. Zur Erhöhung der Verschleißfestigkeit kann das Umformteil gehärtet sein, eine sonstige Bearbeitung/Nachbearbeitung des Umformteils, insbesondere eine aufwendige, spanende Bearbeitung des Umformteils entfällt. Das Umformteil liegt mit seinem geschlossenen Ende am Umfang des den Kolben antreibenden Exzenters oder an einem sonstigen Antriebselement an.

In das offene Ende des Umformteils ist das Ventilsitzteil eingesetzt, beispielsweise eingepreßt, das kostengünstig und einfach beispielsweise aus Kunststoff herstellbar ist. Das Umformteil, in welches das Ventilsitzteil eingesetzt ist, gibt dem Ventilsitzteil eine ausreichende Festigkeit, wenn das Ventilsitzteil beispielsweise aus Kunststoff hergestellt ist, um den beim Betrieb der Kolbenpumpe auftretenden Belastungen stand zu halten. Das Ventilsitzteil weist den Ventilsitz für das die Fluidströmungsrichtung durch die Kolbenpumpe steuernde Ventil auf.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Brernspedalsensor eine Betätigung des Bremspedals erfaßt oder bei der die Pumpe zum Füllen eines Speichers der Bremsanlage dient.

### Zeichnung

Die Erfindung wird nachfolgend anhand zweier bevorzugt ausgewählter, in der Zeichnung dargestellter Ausführungsbeispiele näher erläutert. Die beiden Figuren zeigen zwei erfindungsgemäße Kolbenpumpen im Achsschnitt.

### Beschreibung des ersten Ausführungsbeispiels

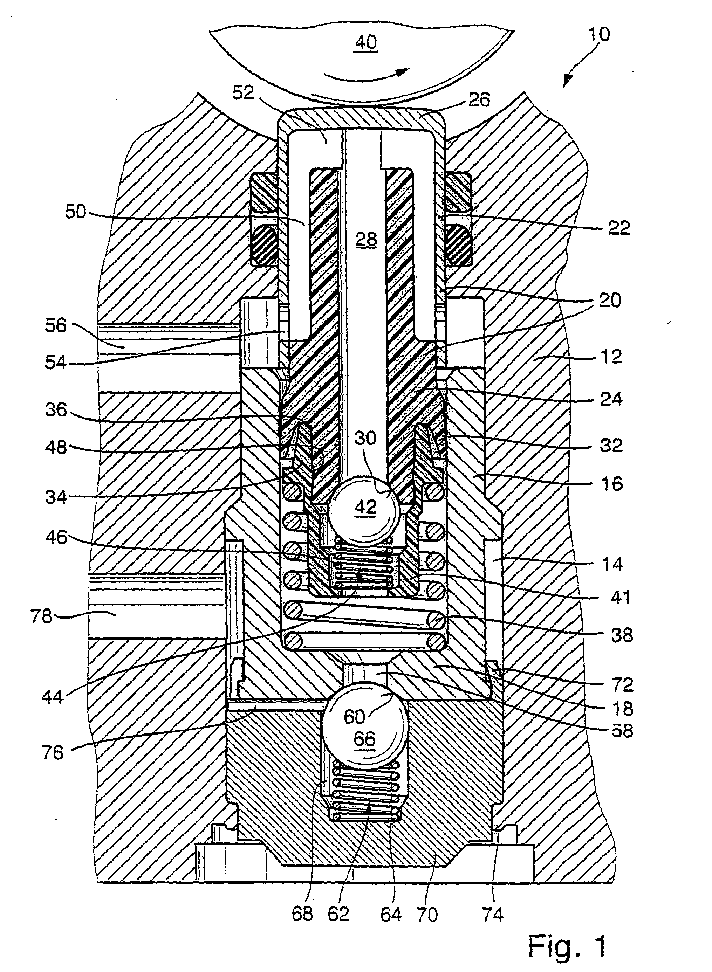

Die in Figur 1 dargestellte, erfindungsgemäße Kolbenpumpe 10 ist in einen Hydraulikblock 12 eingesetzt, der ein Pumpengehäuse bildet und nachfolgend als solches bezeichnet wird. Der Hydraulikblock 12, von dem in der Zeichnung lediglich ein die Kolbenpumpe 10 umgebendes Bruchstück dargestellt ist, enthält eine hydraulische Steuerschaltung einer im übrigen nicht dargestellten, schlupfgeregelten Fahrzeugbremsanlage. In den Hydraulikblock 12 sind außer der Kolbenpumpe 10 weitere hydraulische Bauelemente wie Magnetventile eingesetzt und hydraulisch miteinander verschaltet.

Der das Pumpengehäuse 12 bildende Hydraulikblock ist mit einer Pumpenbohrung 14 versehen, in die eine hohlzylindrische Laufbuchse 16 eingesetzt ist, die einen mit ihr einstückigen Laufbuchsenboden 18 aufweist.

Die Kolbenpumpe 10 weist einen Kolben 20 auf, der über einen Teil seiner Länge in der Laufbuchse 16 und auf einem anderen, aus der Laufbuchse 16 vorstehenden Teil seiner Länge in der Pumpenbohrung 14 axial verschieblich geführt ist. Die Pumpenbohrung 14 und die Laufbuchse 16 bilden eine Kolbenführung 14, 16. Der Kolben 20 ist im wesentlichen aus zwei Teilen zusammengesetzt, er weist ein hülsenförmiges Umformteil 22 und ein in das Umformteil 22 eingesetztes Ventilsitzteil 24 auf. Das Umformteil 22 ist durch Tiefziehen aus einem Metallblech hergestellt, es hat die Form einer hohlzylindrischen Hülse, die auf einer Seite mit einer Stirnwand 26 verschlossen ist, die einstückig mit dem Umformteil 22 ist. Zur Erhöhung der Verschleißfestigkeit ist das Umformteil 22 gehärtet, eine sonstige Bearbeitung erfolgt nicht, eine Oberflächengüte des Umformteils 22 ist ausreichend.

Das in das Umformteil 22 eingepreßte Ventilsitzteil 24 besteht aus Kunststoff, es hat näherungsweise eine Zylinderform und steht mit einem Teil seiner Länge aus dem Umformteil 22 vor. Das Ventilsitzteil 24 ist von einem durchgehenden Axialloch 28 durchsetzt, das auf einer aus dem Umformteil 22 vorstehenden Seite des Ventilsitzteil 24 mit einem konischen Ventilsitz 30 mündet.

Das Ventilsitzteil 24 weist eine mit ihm einstückige, umlaufende Dichtlippe 32 an ihrem aus dem Umformteil 22 vorstehenden Bereich auf. Die Dichtlippe 32, die eine Kolbendichtung bildet, hat die Form eines Hohlkegelstumpfs und weist mit einem freien Rand in Richtung des Laufbuchsenbodens 18. Die Dichtlippe 32 liegt mit Vorspannung innen an der Laufbuchse 16 an und dichtet den Kolben 20 in der Laufbuchse 16 ab. Die Dichtlippe 32 bildet eine hochdruckseitige Kolbendichtung, sie wird auf einer Innenseite von mit der Kolbenpumpe 10 zu förderndem Fluid (Bremsflüssigkeit) beaufschlagt. Steigt der Druck der Bremsflüssigkeit beim Fördern an, wird die mit der Bremsflüssigkeit beaufschlagte Dichtlippe 32 zusätzlich zu ihrer Vorspannung stärker an die Laufbuchse 16 angedrückt, so daß die Dichtlippe 32 auch gegen hohen Druck zuverlässig abdichtet. Bei niedrigem oder Gleichdruck dichtet die Dichtlippe 32 aufgrund ihrer Vorspannung ab. Auf diese Weise wird eine zuverlässige Abdichtung bei unterschiedlichen im Betrieb auftretenden Bremsflüssigkeitsdrücken bei zugleich niedriger Reibung und niedrigem Verschleiß der Dichtlippe 32 erreicht.

Am Kolben 20 ist ein rohrförmiger Abstützkörper 34 angeordnet, der in axialer Richtung an einem Grund 36 der Dichtlippe 32 am Übergang von der Dichtlippe 32 in das Ventilsitzteil 24 angreift. Eine in die Laufbuchse 16 eingesetzte Kolbenrückstellfeder 38 in Form einer Schraubendruckfeder, die sich am Laufbuchsenboden 18 abstützt, drückt gegen den Abstützkörper 34 und drückt über den Abstützkörper 34 den Kolben 20 mit der Stirnwand 26 gegen den Umfang eines elektromotorisch rotierend antreibbaren Exzenters 40 (Antriebselement). Durch rotierenden Antrieb des Exzenters 40 wird der Kolben 20 zu einer in der Pumpenbohrung 14 und in der Laufbuchse 16 (Kolbenführung 14, 16) axial hin- und hergehenden Hubbewegung angetrieben, die in an sich bekannter Weise eine Förderung von Bremsflüssigkeit bewirkt. Durch die Verwendung des Abstützkörpers 34 wird die Kraft der Rückstellfeder 38 gleichmäßig verteilt in das Ventilsitzteil 24 eingeleitet und dadurch eine Verformung oder Beschädigung des Ventilsitzteils 24 vermieden. Durch den Angriff des Abstützkörpers 34 am Grund 36 der Dichtlippe 32 wird die Kraft der Rückstellfeder 38 mit Abstand vom Ventilsitz 30 in das Ventilsitzteil 34 eingeleitet, so daß eine Verformung des Ventilsitzes 30 durch die Kraft der Rückstellfeder 38 vermieden und eine Beeinträchtigung der Dichtwirkung des Ventilsitzes 30 vermieden wird. Ebenso wird durch die Einleitung der Kraft der Rückstellfeder 38 am Grund 36 der Dichtlippe 32 die Dichtlippe 32 nicht von der Kraft der Rückstellfeder 38 beeinträchtigt und eine Dichtwirkung der Dichtlippe 32 nicht durch die Kraft der Rückstellfeder 32 nicht beeinflußt.

Vom Abstützkörper 34 stehen über den Umfang äquidistant verteilt drei Haltearme 41 achsparallel ab, deren freie Enden radial nach innen abgewinkelt sind. Zwischen den Haltearmen 41 ist eine Ventilkugel 42 als Ventilschließkörper eines Einlaßventils 44 aufgenommen, und axial beweglich geführt. Die Haltearme 41 des Abstützkörpers 34 bilden einen Halter und eine Führung der Ventilkugel 42. Die Ventilkugel 42 wird von einer Schraubendruckfeder als Ventilschließfeder 46 gegen den Ventilsitz 30 am Ventilsitzteil 24 des Kolbens 20 gedrückt, die sich an den nach innen abgewinkelten Enden der Haltearme 41 abstützt. Der Abstützkörper 34 weist einen nach innen stehenden umlaufenden Schnappwulst 48 auf, der in einer komplementären Einformung des Ventilstitzteils 24 einliegt. Der Abstützkörper 34 ist also über eine Schnappverbindung 48 am Ventilsitzteil 24 des Kolbens 20 angebracht. Die Anbringung des Abstützkörpers 34 einschließlich des Einlaßventils 44 mittels einer Schnappverbindung 48 am Kolben 20 erleichtert die Handhabung des Kolbens 20 vor und während des Zusammenbaus der Kolbenpumpe 10. Beim Betrieb wird der Abstützkörper 34 von der Rückstellfeder 38 am Kolben 20 gehalten, so daß die Schnappverbindung 48 nach dem Zusammenbau der Kolbenpumpe 10 von untergeordneter Bedeutung ist.

Zum Einlaß von Bremsflüssigkeit ist das Ventilsitzteil 24 auf einem in das Umformteil 22 eingepreßten Teil mit Axialnuten 50 am Umfang und mit Radiatnuten 52 an der Stirnseite versehen, die von aus einer Umfangswand des Umformteils 22 ausgestanzten Durchlaßlöchern 54 zum Axialloch 28 des Ventilsitzteils 24 führen. Der Fluideinlaß erfolgt durch eine im Pumpengehäuse 12 angebrachte Einlaßbohrung 56, die radial in die Pumpenbohrung 14 mündet, und weiter durch die Durchlaßlöcher 54 und die Axial- und Radialnuten 50, 52 in das Axialloch 28 zum Einlaßventil 44.

Der Auslaß erfolgt durch ein Mittelloch 58 im Laufbuchsenboden 18, das mit einem konischen Ventilsitz 60 eines Auslaßventil 62 auf einer Außenseite des Laufbuchsenbodens 18 mündet. Das Auslaßventil 62 ist wie das Einlaßventil 44 als federbeaufschlagtes Rückschlagventil ausgebildet. Eine Schraubendruckfeder als Ventilschließfeder 64 drückt eine einen Ventilschließkörper bildende Ventilkugel 66 gegen den Ventilsitz 60. Die Ventilkugel 66 und die Ventilschließfeder 64 sind in ein axiales Sackloch 68 in einem Verschlußstopfen 70 eingesetzt, der mit einem umlaufenden Bördel 72 am Laufbuchsenboden 18 befestigt ist. Der Verschlußstopfen 70 ist mit einer umlaufenden Verstemmung 74 des Pumpengehäuses 12 in der Pumpenbohrung 14 befestigt und druckfest abgedichtet. Der Auslaß von durch das Auslaßventil 62 ausströmender Bremsflüssigkeit erfolgt durch sternförmig angeordnete Radialkanäle 76 zwischen dem Verschlußstopfen 70 und dem Laufbuchsenboden 18 in die Pumpenbohrung 14 und von dort durch eine radial zur Pumpenbohrung 14 im Pumpengehäuse 12 angebrachte Auslaßbohrung 78.

### Beschreibung des zweiten Ausführungsbeispiels

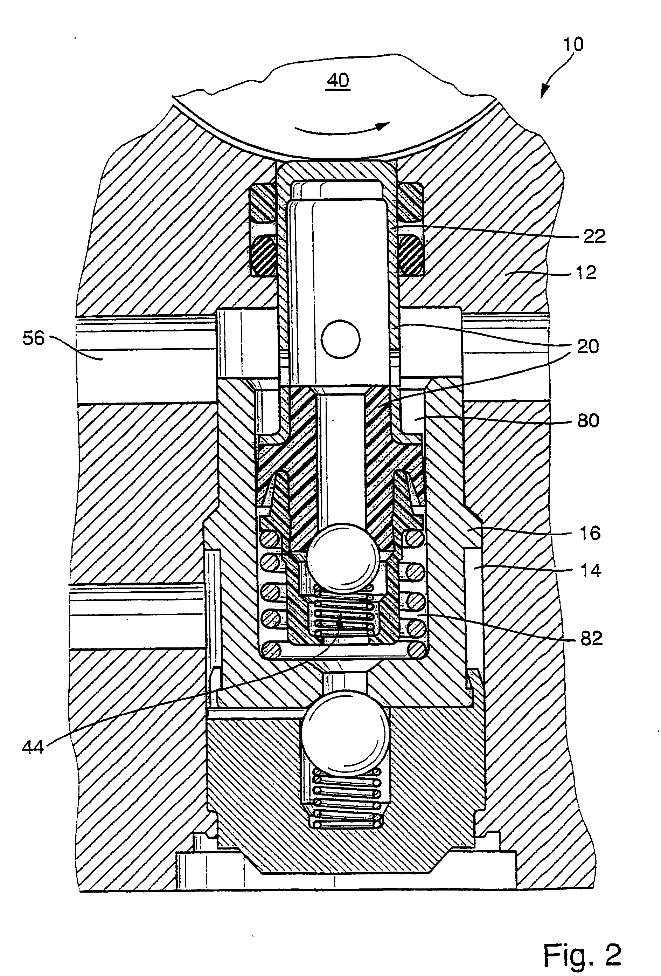

Zur Beschreibung der in Figur 2 dargestellten erfindungsgemäßen Kolbenpumpe 10 werden für mit Figur 1 gleiche Bauteile dieselben Bezugszeichen verwendet. Die Kolbenpumpe 10 aus Figur 2 ist im Unterschied zur Kolbenpumpe 10 aus Figur 1, die als Einfachkolbenpumpe ausgebildet ist, als Stufenkolbenpumpe ausgebildet. Dies bedeutet, der Kolben 20 der Kolbenpumpe 10 aus Figur 2 ist in der Laufbuchse 16 auf einem größeren Durchmesser geführt und abgedichtet als außerhalb der Laufbuchse 16 in der Pumpenbohrung 14 im Pumpengehäuse 12. Durch die Ausbildung als Stufenkolbenpumpe weist die Kolbenpumpe 10 aus Figur 2 einen das Umformteil 22 des Kolbens 20 umgebenden Ringraum 80 in der Pumpenbohrung 14 bzw. in der Laufbuchse 16 auf. Ein Volumen dieses Ringraums 80 ändert sich während der hin- und hergehenden Hubbewegung des Kolbens 20. Das Volumen des Ringraums 80 vergrößert sich, wenn der Kolben 20 vom Exzenter 40 tiefer in die Laufbuchse 16 hineingedrückt wird, also während eines Förderhubs der Kolbenpumpe 10. Die Vergrößerung des Volumens des Ringraums 80 während des Förderhubs bewirkt ein Ansaugen von Bremsflüssigkeit durch die Einlaßbohrung 56. Beim Rückhub des Kolbens 20 verkleinert sich zwar das Volumen des Ringraums 80, jedoch vergrößert sich ein Volumen eines Verdrängungsraums 82 der Kolbenpumpe 10 in größerem Maße, so daß auch während des Rückhubs Bremsflüssigkeit durch das während des Rückhubs geöffnete Einlaßventil 44 angesaugt wird. Die Ausbildung der Kolbenpumpe 10 als Stufenkolbenpumpe bewirkt eine Vergleichmäßigung des Ansaugvolumenstroms und verbessert eine Füllung des Verdrängungsraums 82 und einen Wirkungsgrad der Kolbenpumpe 10.

Im übrigen ist die in Figur 2 dargestellte Kolbenpumpe gleich aufgebaut wie in Figur 1 dargestellte Kolbenpumpe 10 und funktioniert in gleicher Weise. Zur Vermeidung von Wiederholungen wird in soweit auf die oben stehenden Ausführungen zum ersten Ausführungsbeispiel der Erfindung verwiesen.

## Patentansprüche

1. Kolbenpumpe, mit einem eine Kolbenführung (14, 16) aufweisenden Pumpengehäuse (12), mit einem Kolben (20), der in der Kolbenführung (14, 16) axial verschieblich geführt ist, mit einem antreibbaren Antriebselement (40), an dem der Kolben (20) anliegt und mit dem der Kolben (20) zu einer in axialer Richtung hin- und hergehenden Hubbewegung antreibbar ist, mit einer Rückstellfeder (38), die am Kolben (20) angreift und die den Kolben (20) gegen das Antriebselement (40) drückt, und mit einem eine Fluidströmungsrichtung durch die Kolbenpumpe (10) steuernden Ventil (44), das am Kolben (20) angebracht ist, wobei der Kolben (20) ein Ventilsitzteil (24) umfasst, das einen Ventilsitz (30) des die Fluidströmungsrichtung durch die Kolbenpumpe (10) steuernden Ventils (44) aufweist, wobei das Ventilsitzteil (24) eine mit dem Ventilsitzteil (24) einstückige Kolbendichtung (32) aufweist, die den Kolben (20) in der Kolbenführung (14, 16) abdichtet, wobei der Kolben (20) einen Abstützkörper (34) aufweist, an welchem die Rückstellfeder (38) angreift, wobei der Abstützkörper (34) mit Abstand vom Ventilsitz (30) und von der Kolbendichtung (32) am Ventilsitzteil (24) angreift, und wobei die Kolbendichtung eine umlaufende Dichtlippe (32) aufweist, **dadurch gekennzeichnet, dass** das Ventilsitzteil (30) eine Nut zwischen sich und der Dichtlippe (32) aufweist, in deren Grund (36) der Abstützkörper (34) angreift.

2. Kolbenpumpe nach Anspruch 1, **dadurch gekennzeichnet, dass** das Ventilsitzteil (24) ein Kunststoffteil ist.

3. Kolbenpumpe nach Anspruch 1, **dadurch gekennzeichnet, dass** der Abstützkörper (34) als Halter und/oder Führung (41) für einen Ventilschließkörper (42) des die Fluidströmungsrichtung durch die Kolbenpumpe (10) steuernden Ventils (44) ausgebildet ist.

4. Kolbenpumpe nach Anspruch 3, **dadurch gekennzeichnet, dass** das Ventil (44) als Rückschlagventil ausgebildet ist.

5. Kolbenpumpe nach Anspruch 4, **dadurch gekennzeichnet, dass** das Rückschlagventil (44) eine Ventilschließfeder (46) aufweist, die sich an den als Halter (41) für den Ventilschließkörper (42) des die Fluidströmungsrichtung durch die Kolbenpumpe (10) steuernden Ventils (44) ausgebildeten Abstützkörper (34) abstützt und den Ventilschließkörper (42) gegen den Ventilsitz (30) des Ventilsitzteils (24) drückt.

6. Kolbenpumpe nach Anspruch 1, **dadurch gekennzeichnet, dass** der Kolben (20) eine Schnapp- oder Rastverbindung (48) aufweist, über die der Abstützkörper (34) mit dem Ventilsitzteil (24) verbunden ist.

7. Kolbenpumpe nach Anspruch 1, **dadurch gekennzeichnet, dass** der Kolben (20) mehrteilig ausgebildet ist und ein hülsenförmiges, auf einer Seite geschlossenes und auf einer anderen Seite offenes Umformteil (22) aufweist, das mit seiner geschlossenen Seite am Antriebselement (40) anliegt und in dessen offene Seite das Ventilsitzteil (24) eingesetzt ist.

## Claims

1. Piston pump, with a pump casing (12) having a piston guide (14, 16), with a piston (20) which is guided axially displaceably in the piston guide (14, 16), with a driveable drive element (40), against which the piston (20) bears and by means of which the piston (20) can be driven in axially to-and-fro lifting movement, with a return spring (38) which engages on the piston (20) and which presses the piston (20) against the drive element (40), and with a valve (44) which controls a fluid flow direction through the piston pump (10) and which is mounted on the piston (20), the piston (20) comprising a valve-seat part (24) which has a valve seat (30) of the valve (44) controlling the fluid flow direction through the piston pump (10), the valve-seat part (24) being a piston seal (32) which is in one piece with the valve-seat part (24) and this seals off the piston (20) in the piston guide (14, 16), a piston (20) having a supporting body (34), in which the return spring (38) engages, the supporting body (34) engaging on the valve-seat part (24) at a distance from the valve seat (30) and from the piston seal (32), and the piston seal having a peripheral sealing lid (32), **characterized in that** the valve-seat part (30) has between itself and the sealing lid (32) a grip in the bottom (36) of which that supporting body (34) engages.

2. Piston pump according to Claim 1, **characterized in that** the valve-seat part (24) is a plastic part.

3. Piston pump according to Claim 1, **characterized in that** the supporting body (34) is designed as a holder and/or guide (41) for a valve-closing boy (42) of the valve (44) controlling the fluid flow direction through the piston pump (10).

4. Piston pump according to Claim 3, **characterized in that** the valve (44) is designed as a non-return valve.

5. Piston pump according to Claim 4, **characterized in that** the non-return valve (44) has a valve-closing spring (46) which is supported on the supporting body (34), designed as a holder (41) for the valve closing body (42) of the valve (44) controlling the fluid flow direction through the piston pump (10), which presses the valve-closing body (42) against the valve seat (30) of the valve-seat part (24).

6. Piston pump according to Claim 1, **characterized in that** the piston (20) has a snapping or latching connection (48), via which the support body (54) is connected to the valve-seat part (24).

7. Piston pump according to Claim 1, **characterized in that** the piston (20) is of multi-part design and has a sleeve-shaped formed path (22) which is closed on one side and open on the other side and which bears with its closed side against the drive element (40) and into the open side of which the valve-seat part (24) is inserted.

## Revendications

1. Pompe à piston comprenant :
un corps de pompe (12) avec un guidage de piston (14, 16),
un piston (20) guidé de manière coulissante axialement dans le guidage de piston (14, 16),
un élément d'entraînement (14), entraîné, contre lequel s'appuie le piston (20) et qui entraîne le piston (20) suivant un mouvement de va-et-vient dans la direction axiale,
un ressort de rappel (38) appliqué au piston (20) et poussant le piston (20) contre l'élément d'entraînement (40) et
une soupape (44) commandant la direction de passage du fluide à travers la pompe à piston (10), cette soupape équipant le piston (20),
le piston (20) comprenant une partie de siège de soupape (24) ayant un siège de soupape (30) pour la soupape (44) commandant la direction de passage du fluide à travers la pompe à piston (10),
la partie de siège de soupape (24) ayant un joint de piston (32) faisant corps avec la partie de siège de soupape (24), ce joint assurant l'étanchéité du piston (20) dans le guidage de piston (14, 16),
le piston (20) ayant un organe d'appui (34) contre lequel s'appuie le ressort de rappel (38), l'organe d'appui (34) étant appliqué contre la partie de siège de soupape (24) à distance du siège de soupape (30) et du joint de piston (32) alors que le joint de piston comporte une lèvre d'étanchéité (32) périphérique,
**caractérisée en ce que**
la partie de siège de soupape (30) comporte une rainure entre elle et la lèvre d'étanchéité (32) et l'organe d'appui (34) vient contre le fond de cette rainure.

2. Pompe à piston selon la revendication 1,
**caractérisée en ce que**
la partie formant siège de soupape (24) est une pièce en matière plastique.

3. Pompe à piston selon la revendication 1,
**caractérisée en ce que**
l'organe d'appui (34) est un support et/ou un moyen de guidage (41) pour un organe d'obturation de soupape (42) de la soupape (44) commandant la direction de passage du fluide à travers la pompe à piston (10).

4. Pompe à piston selon la revendication 3,
**caractérisée en ce que**
la soupape (44) est une soupape anti-retour.

5. Pompe à piston selon la revendication 4,
**caractérisée en ce que**
la soupape anti-retour (44) comporte un ressort de fermeture de soupape (46) qui s'appuie contre l'organe d'appui (34) réalisé comme support (41) pour l'organe d'obturation de soupape (42) de la soupape (44) commandant la direction de passage du fluide à travers la pompe à piston (10) et qui pousse l'organe d'obturation de soupape (42) contre le siège de soupape (30) de la partie formant siège de soupape (24).

6. Pompe à piston selon la revendication 1,
**caractérisée en ce que**
le piston (20) comporte une liaison par enclipsage ou encliquetage (48) reliant l'organe d'appui (34) à la partie formant siège de soupape (24).

7. Pompe à piston selon la revendication 1,
**caractérisée en ce que**
le piston (20) est réalisé en une seule pièce et comporte une pièce (22) en forme de manchon obtenue par formage, dont un côté est fermé, l'autre est ouvert, et son côté fermé est appliqué contre l'élément d'entraînement (40) et son côté ouvert reçoit la partie formant siège de soupape (24).
